# EUROPÄISCHE PATENTSCHRIFT

(11) **EP 3 286 273 B1**
(45) Veröffentlichungstag und Bekanntmachung des Hinweises auf die Patenterteilung: **24.07.2019**
(21) Anmeldenummer: 16719265.7
(22) Anmeldetag: 12.04.2016
(51) Int. Cl.: C09D 175/00

(54) **ZWEIKOMPONENTIGE BESCHICHTUNGSMASSEN**
TWO-COMPONENT COATING COMPOUNDS
MATIÈRES DE REVÊTEMENT À DEUX COMPOSANTS

(30) Priorität: 20.04.2015 EP 15164273
(43) Veröffentlichungstag der Anmeldung: 28.02.2018
(73) Patentinhaber: BASF SE, 67056 Ludwigshafen am Rhein (DE)
(72) Erfinder: SCHAEFER, Harald, 68219 Mannheim (DE); BINDER, Horst, 68623 Lampertheim (DE); LUCAS, Frederic, 68159 Mannheim (DE); EMMERLING, Sebastian, 76865 Rohrbach (DE)
(74) Vertreter: BASF IP Association
(86) Internationale Anmeldenummer: PCT/EP2016/058002
(87) Internationale Veröffentlichungsnummer: WO 2016/169810

(56) Entgegenhaltungen:
- WO-A1-2012/007431
- WO-A1-2012/013681
- US-A1- 2012 029 144

## Beschreibung

Die vorliegende Erfindung betrifft die Verwendung einer zweikomponentigen Beschichtungsmasse, die
a) mindestens ein Polyisocyanat erhältlich durch Umsetzung von Pentamethylendiisocyanat
b) mindestens ein hydroxyfunktionelles Poly(meth)acrylatpolyol
c) mindestens eine Lewis-Base als Urethanisierungskatalysator
d) mindestens ein organisches Lösungsmittel
e) optional andere lacktypische Additive und
f) optional Füllstoffe, Farbstoffe und/oder Pigmente,
enthält, zur Herstellung von Beschichtungen in einem Temperaturbereich bis zu 80°C.

WO 2008015134 beschreibt ein Verfahren zur Herstellung von Pentamethylen-1,5-diisocyanat (PDI), dadurch gekennzeichnet, dass man Lysin in 1,5-Pentandiamin, und dieses in Pentamethylen-1,5-diisocyanat überführt. Beschrieben wird auch die Verwendung von PDI zur Herstellung von Polyisocyanaten.

Die Patentschrift beschreibt weiterhin eine Eignung zur Herstellung von Isocyanurat-, Uretdion-, Biuret-, Urethan-, Allophanat-, Oxadiazintrion-, Iminooxadiazindion-, und/oder Uretonimin-Gruppen aufweisenden Polyisocyanaten. Derartige Polyisocyanatmischungen werden insbesondere zur Herstellung von lichtbeständigen Polyurethanlacken und -Überzügen verwendet. Diese können beispielsweise in Beschichtungsmitteln für 1 K- oder 2K-Polyurethanlacke eingesetzt werden, beispielsweise für Grundierungen, Füller, Basecoats, unpigmentierte und pigmentierte Decklacke und Klarlacke im Bereich Industrie-, insbesondere Flugzeug- oder Großfahrzeuglackierung, Holz-, Auto-, insbesondere OEM- oder Autoreparaturlackierung, oder Dekolackierung.

EP 2543736 beschreibt eine Methode zur Herstellung von Pentamethylen-1,5-diamin, bei der ein Lysindecarboxylase exprimierender Mikroorganismus einer Behandlung unterzogen wird. Es beansprucht auch die Umsetzung des Pentamethylen-1,5-diamins zu Pentamethylen-1,5-di-isocyanat mittels Phosgenierung, oder Carbamatisierung mit nachfolgender thermischer Zersetzung des Carbamats umfassend den Einsatz eines Antioxidanz und einer Säure oder Sulfonamids. Es beschreibt auch, dass sich entsprechend hergestelltes Pentamethylen-1,5-diisocyanat zur Herstellung von Polyisocyanaten, enthaltend Isocyanurat-, Allophanat-, Biuret-, Urethan-, und/oder Harnstoff-Gruppen, eignet, sowie deren Umsetzung mit aktiven Wasserstoffgruppen enthaltenden Verbindungen zu Polyurethanen.

Beispiel 24 beschreibt die Herstellung des Isocyanurats von PDI aus 500 Teilen erfindungsgemäßem PDI, 0,25 Teilen BHT (2,6-Di-(tert.-butyl)-4-methylphenol) und 0.25 Teilen Tris-(tridecyl)-phosphit bei einer Temperatur von 60° C. Es wurden 0,1 Teile N-(2-Hydroxypropyl)-N,N,N-trimethylammonium-2-ethylhexanoat als Trimerisierungskatalysator zugegeben. Nach 1 h wurden 0,12 Teile o-Toluolsulfonamid als Katalysator-Stopper zugegeben und Rest-PDI abdestilliert. Zum Produkt wurden 0,02 Teile o-Toluolsulfonamid zugegeben. Das Produkt hatte eine Viskosität von 1530 mPa *s/25 °C und eine Farbzahl von 20 Hz. Nach einem Lagertest für 4 Tage bei 60 °C wurde eine Viskosität von 1650 mPa *s/25 °C und eine Farbzahl von 30 Hz gemessen. Aus den PDI-Oligomeren können Polyurethane hergestellt werden. Ein Polyisocyanurat wurde mit einem Polyacrylatpolyol (Takelac® UA-702) umgesetzt und 30 min bei 80 °C, 1 h bei 110 °C und abschließend für 7 Tage bei RT gehärtet, und dann die Martens-Härte, Zugbeständigkeit, Lösungsmittelbeständigkeit und Kratzfestigkeit bestimmt.
Es gibt keine Daten zur Härtung bei niedrigeren Temperaturen.

EP 2684867 beschreibt Pentamethylendiisocyanat, erhalten durch Phosgenierung von Pentamethylendiamin oder seinem Salz, hergestellt mittels einer biochemischen Methode, bei der das PDI 5 bis 400 ppm eines monochlorsubstituierten 1-Aza-cyclo-2- oder -3-hexen-N-carbonyl-chorids enthält. Die Schrift beschreibt zudem aus diesem PDI hergestellte Polyisocyanate enthaltend Isocyanurat-, Allophanat-, Biuret-, Urethan-, und/oder Harnstoff-Gruppen, sowie daraus hergestellte Polyurethane durch Umsetzung mit Wasserstoff-aktiven Verbindungen. Pentamethylendiamin wird beispielsweise durch biochemische Methoden wie Decarboxylierung von Lysin oder Fermentation beispielsweis von Glucose hergestellt.

Bei der Herstellung erfindungsgemäßen PDIs erfolgt eine Befreiung von hydrolysierbarem Chlor und obigen Heterocyclen durch Erhitzen und Destillation von PDI bei 180-240 °C. Dies erfolgt bevorzugt in Anwesenheit einer Phosphorhaltigen Substanz, Phosphiten, insbesondere Tris-(tridecyl)-phosphit. EP 2684867 beschreibt, dass ein erfindungsgemäßes PDI eine höhere Reaktivität bei der Herstellung von Polyisocyanaten, eine bessere Lagerstabilität der Polyisocyanate in Bezug auf den NCO-Abbau bei 60 °C, und verbesserte Lackeigenschaften nach Umsetzung mit Wasserstoff-aktiven Verbindungen aufweist. In den Beispielen erfolgt die Herstellung eines PDI-Isocyanurats jeweils auf Basis eines PDIs welches vor der Umsetzung für 14 Tage bei 50 °C mit 50 ppm BHT vorgelagert wurde. Beispiel 7 beschreibt in Analogie zur EP 2543736, dass das PDI für 2 h bei 80 °C mit Isobutylalkohol in Anwesenheit der Antioxidanzien BHT und Tris-(tridecyl)-phosphit prä-urethanisiert wird, dann anschließend mit 200 ppm N-(2-Hydroxypropyl)-N,N,N-trimethylammonium-2-ethylhexanoat als Katalysator für 50 min isocyanuretisiert, mit ortho-Toluolsulfonamid der Katalysator gestoppt und von überschüssigem PDI destilliert wird.

EP 2684867 beschreibt, dass Polyisocyanate auf Basis PDI mit H-aktiven Verbindungen umgesetzt werden können, beispielsweise Polyetherolen, Polyesterpolyolen, Polycarbonatpolyolen, Polyurethanpolyolen und Polyacrylatpolyolen. Es beschreibt die Umsetzung Acrylatpolyolen, z.B. OLESTER Q666 bzw. Castorölbasiertem Takelac® U-27 zu Polyurethanlacken, welche 30 min bei 80 °C, 1 h bei 110 °C und abschließend für 7 Tage bei RT gehärtet, und dann die Martens-Härte, Zugbeständigkeit, Lösungsmittelbeständigkeit und Kratzfestigkeit bestimmt wurden.

Es gibt keine Hinweise auf die Eigenschaften eines Lacks bei Umsetzung der beiden Komponenten bei niedriger Temperatur.

EP 2806026 beschreibt eine ganz spezifische mutierte Lysin-Decarboxylase, eine Methode damit L-Lysin zu 1,5-Pentamethylendiamin umzusetzen, eine Methode daraus oder dessen Salz, Pentamethylen-1,5-diisocyanat, respektive daraus Polyisocyanate enthaltend Isocyanurat-, Allophanat-, Biuret-, Urethan-, und/oder Harnstoff-Gruppen herzustellen.

EP 2806026 benennt die Möglichkeit ein PDI-basiertes Polyisocyanat mit Komponenten mit aktivem Wasserstoff umzusetzen, beispielsweise Polyetherolen, Polyesterpolyolen, Polycarbonatpolyolen, Polyurethanpolyolen und Polyacrylatpolyolen. Diese könnten bei Raumtemperatur bis 250 °C gehärtet werden. Die Herstellung eines Polyisocyanurats erfolgt in Analogie zur EP 2543736 in Form einer Präurethanisierung mit 100 Teilen PDI mit 0,8 Teilen 1,3-Butandiol in Anwesenheit von Antioxidanzien, 250 ppm BHT und 250 ppm Tris(tridecyl)-phosphit für 3 h bei 80 °C, gefolgt von einer Isocyanuretisierung in Anwesenheit von 200 ppm N-(2-Hydroxypropyl)-N,N,N-trimethylammonium-2-ethylhexanoat als Katalysator für 1 h. Mit ortho-Toluolsulfonamid wird der Katalysator gestoppt, von überschüssigem PDI destilliert und nachfolgend mit weiterem ortho-Toluolsulfonamid stabilisiert.

JP 5254121 B2 beschreibt die Herstellung eines Polyisocyanurats auf Basis von Pentamethylendiisocyanat, bei der das Monomer einen Anteil an hydrolysierbarem Chlor von unter 100 ppm und einen Sauerstoffanteil von weniger als 5 ppm aufweist. Zur Reduktion des hydrolysierbarem Chlors wird das PDI vor der Trimerisierung unter Inertgas bevorzugt 3-6 h bei 160-200°C getempert und dann rektifiziert. Bevorzugt ist die Destillatfraktion von 10-80 % des PDI [022]. Z.B. kann auch eine Entfernung des hydrolysierbaren Chlors durch Behandlung mit Metallen, z.B. Kupfer, vor dem Temperschritt erfolgen. Das PDI wird vor der Trimerisierung einem Entgasungsprozess unterworfen.

Isocyanuretisierungskatalysatoren sind beispielsweise Tetraalkylammoniumhydroxide odercarboxylate, beispielsweise Trimethyl-2-hydroxypropylammonium-2-ethylhexanoat (DABCO TMR). Die Präurethanisierung des PDI und anschließende Isocyanuratisierung erfolgt in Analogie zu den vorgenannten Patenten EP 2543736, EP 2684867 und EP 2806026. Als Vorteil dieser Polyisocyanurate auf Basis des entsprechend gereinigten PDIs wird ihre hohe Lagerstabilität in Bezug auf Farbzahl und Viskosität bei Lagerung und kürzere Reaktionszeiten / Kosteneffektivität bei der Isocyanuretisierung benannt.

Die Umsetzung des Polyisocyanurats auf Basis PDI mit Polyolen zu Polyurethanen beispielsweise Lacken wird benannt.

Es gibt keine konkreten Beispiele für Beschichtungen und keinen Vergleich in der Applikation zu Polyisocyanuraten anderer Diisocyanate.

JP 2011201863 A2 beschreibt die Herstellung von Pentamethylendiisocyanat aus Pentamethylendiamin oder seinem Salz auf Basis von weniger als 2 Massen-% Sechsringverbindungen mit C-N-Doppelbindung.

Beispielsweise wird in Analogie zu Beispiel 24 der EP 2543736 ein Isocyanurat der Viskosität 1530 mPa *s/25 °C hergestellt, und analog auch mit dem Polyacrylatpolyol Takelac® UA-702 umgesetzt und 30 min bei 80 °C, 1 h bei 110 °C und abschließend für 7 Tage bei RT gehärtet, und dann die Martens-Härte, Zugbeständigkeit, Lösungsmittelbeständigkeit und Kratzfestigkeit bestimmt. Diese sind besser als die der Isocyanurate auf Basis des Referenz-PDIs.

Es gibt keine konkreten Beispiele für eine Eignung für Beschichtungen bei tieferen Härtungstemperaturen und keinen Vergleich in der Applikation zu Polyisocyanuraten anderer Diisocyanate.

JP5225813 B2 beschreibt die Herstellung eines Polyisocyanurats auf Basis von Pentamethylendiisocyanat, bei der das Monomer in Analogie zur JP 5254121 B2 einen Anteil an hydrolysierbarem Chlor von unter 100 ppm aufweist, und weiterhin die Anwesenheit eines C1-C20-Alkohols bei der Isocyanuretisierung und weiterhin Anwesenheit von 10-5000 ppm Sulfonamid im Endprodukt.

Die Herstellung des PDIs erfolgt beispielsweise nach einem Flüssigphosgenierungsverfahren in ortho-Dichlorbenzol als Lösungsmittel, mit Temperung und mehrfacher Destillation des PDI zur Reduktion des Rest-HDI-Gehalts unter 100 ppm.

In Analogie zu Beispiel 24 der EP 2543736 wird ein Polyisocyanat aus PDI und 1 % Isobutylalkohol mit einer Viskosität von 410 mPa*s hergestellt. In einem Vergleichsbeispiel wird in Analogie auf Basis Hexamethylendiisocyanat ein Polyisocyanat mit einer Viskosität von 600 mPa*s hergestellt. In Analogie zur EP 2543736 werden die Polyisocyanate mit dem Polyacrylatpolyol Takelac® UA-702 umgesetzt und 30 min bei 80 °C, 1 h bei 110 °C und abschließend für 7 Tage bei RT gehärtet, und dann die Martens-Härte, Zugbeständigkeit, Lösungsmittelbeständigkeit und Kratzfestigkeit bestimmt. Diese sind besser als die der Isocyanurate auf Basis des Referenz-PDIs.

Analog werden das Polyisocyanat und das Referenzpolyisocyanat mit einem Polyesterpolyol Takelac® U-27 analog dem Polyacrylatpolyol zu einem Lack umgesetzt. Das Polyisocyanat auf Basis von PDI schneidet in den Lackeigenschaften besser ab als das auf Basis Hexamethylendiisocyanat.

Es gibt keine Beispiele für eine Eignung für Beschichtungen bei tieferen Härtungstemperaturen.

US 2012/029144, WO 2012/013681 und WO 2012/007431 beschreiben jeweils zweikomponentige Beschichtungsmassen, welche Polyisocyanate und Verbindungen mit gegenüber Isocyanatgruppen reaktiven Gruppen aufweisen. Allerdings werden keine Lewis-Basen als Urethanisierungskatalysatoren offenbart.

Aufgabe der vorliegenden Erfindung war es zweikomponentige Beschichtungsmassen zur Verfügung zu stellen, die gegenüber bekannten Beschichtungsmassen eine schnelle Trocknung und Pendelhärteentwicklung im Temperaturbereich bis 80 °C und eine gute Chemikalienbeständigkeit aufweisen.

Die Aufgabe wurde gelöst durch die Verwendung einer zweikomponentigen Beschichtungsmasse, die
a) mindestens ein Polyisocyanat erhältlich durch Umsetzung mindestens eines Pentamethylendiisocyanats,
b) mindestens ein hydroxyfunktionelles Poly(meth)acrylatpolyol,
c) mindestens eine Lewis-Base als Urethanisierungskatalysator,
d) mindestens ein organisches Lösungsmittel,
e) optional andere lacktypische Additive und
f) optional Füllstoffe, Farbstoffe und/oder Pigmente, enthält, zur Herstellung von Beschichtungen in einem Temperaturbereich bis 80°C.

Zweikomponentige Polyurethanbeschichtungsmassen bestehen aus zwei Komponenten, von denen die eine mindestens ein Polyisocyanat, die zweite mindestens ein hydroxyfunktionelles Polymer enthält. Gemäß dieser Erfindung handelt es sich dabei um mindestens ein Poly-(meth)acrylatpolyol und gegebenenfalls ein Polyesterpolyol. Polyisocyanate umfassen dabei Oligo- und Polyisocyanate.

Die Bezeichnung "(meth)acryl" und ähnliche Bezeichnungen stehen abkürzend für "acryl oder methacryl".

Bevorzugt handelt es sich um lösungsmittelbasierte Systeme. Als lösungsmittelbasierte Systeme werden hier Systeme verstanden, die in der Mischung der zwei Komponenten organische Lösungsmittel enthalten, also keine 100%-Systeme und keine Pulverlacke (bei Raumtemperatur feste Systeme) sind, und die keine wasserbasierten Systeme sind. Wasserbasierte Systeme sind solche bei denen vorsätzlich Wasser als relevantes Lösungsmittel eingesetzt wird. Lösungsmittelbasierte Systeme können, z.B. über den Polyester prozessbedingt geringe Mengen an Wasser enthalten. Diese liegen, bezogen auf den Polyester in Lieferform, bevorzugt bei weniger als 2 Gew.%, besonders bevorzugt unterhalb von 1,0 Gew.%, abhängig vom Polyester und seiner Herstellung insbesondere unter 0,5 Gew. %.

Physikalische Messwert werden, soweit nicht anders angegeben, bestimmt, wie in den Beispielen beschrieben.

Als Komponente a) wird mindestens ein, beispielsweise ein bis zwei und bevorzugt genau ein Polyisocyanat eingesetzt, das durch Umsetzung mindestens eines Pentamethylendiisocyanats erhältlich ist.

Neben Pentamethylendiisocyanat können von Pentamethylendiisocyanat verschiedene monomere Isocyanate umgesetzt werden. Die eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird. Aromatische Isocyanate sind solche, die mindestens ein aromatisches Ringsystem enthalten, also sowohl rein aromatische wie auch araliphatische Verbindungen. Cycloaliphatische Isocyanate sind solche, die mindestens ein cycloaliphatisches Ringsystem enthalten. Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen.

Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in Betracht. Dafür eignen sich beispielsweise Triisocyanate wie Triisocyanatononan, 2'-Isocy-anato-ethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen. Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocy-anatohexanoat), Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diiso-cyanato-1-methylcyclohexan sowie 3 (bzw. 4), 8 (bzw. 9)-Bis(isocyanatomethyl)-tricy-clo[5.2.1.0^{2.6}]decan-Isomerengemische, sowie aromatische Diisocyanate wie 2,4- oder 2,6-To-luylendiisocyanat und deren Isomerengemische, m-oder p-Xylylen-diisocyanat, 2,4'- oder 4,4'-Diisocyanatodiphenylmethan und deren Isomerengemische, 1,3-oder 1,4-Phenylendiisocyanat, 1-Chlor-2,4-phenylendiisocyanat, 1,5-Naphthy-lendiisocyanat, Diphenylen-4,4'-di-isocyanat, 4,4'-Diisocyanato-3,3'-dimethyldiphenyl, 3-Me-thyldi-phenylmethan-4,4'-diisocyanat, Tetramethylxylylendiisocyanat, 1,4-Diisocyanatobenzol oder Diphenylether-4,4'-diisocyanat. Besonders bevorzugt sind 1,6-Hexamethylendiisocyanat, 1,3-Bis(isocyanatomethyl)-cyclo-hexan, Isophorondiisocyanat und 4,4'- oder 2,4'-Di(isocyanatocyclohexyl)methan, ganz besonders bevorzugt sind Isophorondiisocyanat und 1,6-Hexa-methylendiisocyanat, insbesondere bevorzugt ist 1,6-Hexamethylendiisocyanat. Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25. Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)-aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozess zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 80 ppm, bevorzugt weniger als 30 ppm, und insbesondere weniger als 25 ppm auf. Dies kann beispielsweise gemessen werden durch die ASTM-Vorschrift D4663-98.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Bevorzugt werden zur Herstellung von Komponente a) keine von Pentamethylendiisocyanat verschiedenen monomeren Isocyanate eingesetzt.

Als optionale weitere Komponente gemäß der vorliegenden Erfindung verwendet man mindestens ein, beispielsweise ein bis zwei und bevorzugt genau ein Polyisocyanat, das durch Umsetzung ausschließlich von Pentamethylendiisocyanat verschiedener monomerer Isocyanate erhältlich ist.

Die Polyisocyanate zu denen die monomeren Isocyanate oligomerisiert werden können, sind in der Regel wie folgt charakterisiert. Die mittlere NCO Funktionalität solcher Verbindungen beträgt in der Regel mindestens 1,8 und kann bis zu 8 betragen, bevorzugt 2 bis 5 und besonders bevorzugt 2,4 bis 4. Der Gehalt an Isocyanatgruppen nach der Oligomerisierung, berechnet als NCO = 42 g/mol, beträgt, wenn nicht anders angegeben, in der Regel von 5 bis 28 Gew%.

Bevorzugt handelt es sich bei den Polyisocyanaten a) um folgende Verbindungen, respektive deren Mischungen:
1) Isocyanuratgruppen aufweisende Polyisocyanate von Pentamethylendiisocyanat bzw. von aromatischen, aliphatischen und/oder cycloaliphatischen Diisocyanaten und Pentamethylendiisocyanat. Besonders bevorzugt sind die entsprechenden Isocyanuratgruppen aufweisende Polyisocyanate auf Basis von Pentamethylendiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 28 Gew.-% und eine mittlere NCO-Funktionalität von 2,6 bis 8.
2) Uretdiongruppen aufweisende Polyisocyanate von Pentamethylendiisocyanat. Bei Uretdiondiisocyanaten handelt es sich um cyclische Dimerisierungsprodukte von Diisocyanaten. Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate von Pentamethylendiisocyanat, insbesondere Tris-(6-isocyanatopentyl)-biuret oder dessen Gemische mit seinen höheren Homologen. Diese Biuretgruppen aufweisenden Polyisocyanate weisen vorzugsweise einen NCO-Gehalt von 18 bis 27 Gew.-% und eine mittlere NCO-Funktionalität von 2,8 bis 6 auf.
4) Allophanat- und/oder Urethangruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, vorzugsweise von Pentamethylendiisocyanat, mit ein- oder mehr-wertigen Alkoholen hergestellt werden. Diese Urethan- und/oder Allophanatgruppen aufweisenden Polyisocyanate haben im Allgemeinen einen NCO-Gehalt von 12 bis 26 Gew.-% und eine mittlere NCO-Funktionalität von 2,3 bis 4,5. Solche Urethan- und/oder Allophanatgruppen aufweisenden Polyisocyanate werden bevorzugt in Gegenwart von Katalysatoren, wie beispielsweise Ammoniumcarboxylaten oder -hydroxiden jeweils in Anwesenheit von ein-, zwei- oder mehrwertigen, bevorzugt einwertigen Alkoholen hergestellt.
5) Oxadiazintriongruppen enthaltende Polyisocyanate, vorzugsweise von Pentamethylendiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Pentamethylendiisocyanat abgeleitet. Solche Iminooxadiazindiongruppen enthaltenden Polyisocyanate sind aus Diisocyanaten mittels spezieller Katalysatoren herstellbar. Diese liegen üblicherweise in einem Gemisch mit Polyisocyanaten 1), ggf. noch mit 2) und / oder 4) vor.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehr-wertigen, bevorzugt einwertigen Alkoholen, gegebenenfalls in Gegenwart von geeigneten Katalysatoren. Diese Biuret- oder Urethan-/Allophanatgruppen aufweisenden Polyisocyanate weisen im Allgemeinen einen NCO-Gehalt von 18 bis 23 Gew.-% und eine mittlere NCO-Funktionalität von 2,8 bis 6 auf.

In einer bevorzugten Ausführungsform der vorliegenden Erfindung ist das Polyisocyanat a) ausgewählt aus der Gruppe bestehend aus Isocyanuraten, Iminooxadiazindionen, Biureten, Uretdionen, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten, insbesondere handelt es sich um ein isocyanuratgruppenhaltiges Polyisocyanat.

Die oben aufgeführten Diisocyanate oder Polyisocyanate können auch zumindest teilweise in blockierter Form vorliegen. Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001). Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer weiteren Ausführungsform weist das Polyisocyanat a) eine Viskosität von 200-1600 mPa*s (23°C) auf. Bevorzugt handelt es sich bei dem Polyisocyanat a) um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, und niederviskose Allophanat- und/oder Urethane in Gemisch mit Isocyanurat mit einer Viskosität von 200-1600 mPa*s.

Das Verfahren zur Herstellung der Polyisocyanate kann erfolgen, wie in WO 2005/087828 oder wie in WO 2008/068198 beschrieben, dort besonders von Seite 20, Zeile 21 bis Seite 27, Zeile15, was hiermit durch Bezugnahme Bestandteil der vorliegenden Anmeldung sei. Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei. Die Reaktion kann alternativ auch abgebrochen werden, wie in WO 2005/087828 von Seite 11, Zeile 12 bis Seite 12, Zeile 5 beschrieben, was hiermit durch Bezugnahme Bestandteil der vorliegenden Anmeldung sei. Bei thermisch labilen Katalysatoren ist es weiterhin auch möglich, die Reaktion abzubrechen durch Erhitzen des Reaktionsgemischs auf eine Temperatur oberhalb von mindestens 80°C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist. Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat, Sulfonamide oder organische Carbonsäuren. Diese Verbindungen werden pur oder verdünnt in geeigneter Konzentration, die zum Reaktionsabbruch erforderlich ist, zugegeben. Bevorzugt sind Dibutylphosphat oder Diethylhexylphosphat.

Niedrigviskose Polyisocyanate oder Allophanate von Diisocyanaten können beispielsweise auch entsprechend der WO 2005/087828 hergestellt werden. Bei den niedrigviskosen Polyisocyanaten wird die Reaktion bei niedrigerem Umsatz als in den konkreten Beispielen der WO 2005/087828 thermisch oder durch chemische Desaktivatoren abgebrochen, ansonsten aber analog verfahren. Auf diese Weise können Produkte auf Basis Diisocyanat mit Viskositäten beispielsweise von 900-1500 mPa*s hergestellt werden, jedoch auch mit niedrigeren Viskositäten, bevorzugt bis zu 500 mPa*s. In analoger Weise können auch Allophanate mit den gleichen Katalysatoren hergestellt werden, in dem zu dem monomeren Diisocyanat zusätzlich Mono- und / oder Dialkohole, bevorzugt C1-C18 Mono- und / oder C2-C18 Dialkohole zugegeben werden. Bevorzugt sind dies Butanol, Pentanol, 2-Ethyl-hexanol, 1,3-Hexandiol, respektive 3,3,5-Trimethylpentandiol. Monoalkohole werden bevorzugt in Mengen bis maximal 25 % auf Endprodukt zugegeben. Die Viskositäten der Produkte aus Pentamethylen- bzw. Hexamethylendiisocyanat und Monoalkohol liegen bevorzugt in einem Bereich von 200-1500 mPa*s. Sie enthalten entsprechend der üblichen Zusammensetzung der Polyisocyanate 2) wesentliche Mengen Isocyanurate, ggf. auch Urethane. Analog können auch hochviskose Polyisocyanate oder Allophanate von Diisocyanaten beispielsweise entsprechend der WO 2005/087828 hergestellt werden. Bei den hochviskosen Polyisocyanaten wird die Reaktion bei höherem Umsatz als in den konkreten Beispielen der WO 2005/087828 thermisch oder durch chemische Desaktivatoren abgebrochen. Bevorzugt betragen die Viskositäten von Polyisocyanaten basierend auf Penta- oder Hexamethylendiisocyanat nicht mehr als 30 Pa*s. Eine Verdünnung der hochviskosen Verbindungen in Lösungsmitteln ist sinnvoll.

Pentamethylendiisocyanat kann aus Pentamethylendiamin (Kadaverin, Diaminopentan) hergestellt werden. Pentamethylendiamin kann aus biogener oder nicht biogener Quelle stammen. Bei der Herstellung aus biogener Quelle kann die Herstellung des Pentamethylendiamins z.B. auf Basis Lysin durch Decarboxylierung, beispielsweise entsprechend der WO 2007 113127 (S. 4; Z. 30 - S. 11, Z. 6), oder WO 2011 073278 (S. 8, Z. 9 - S. 25 Z. 16, oder durch Fermentation und Extraktion von Zuckern oder Melasse erfolgen, beispielsweise entsprechend der WO 2009 092793 (S. 3, Z. 20 - S. 5, Z. 4; S. 16, Z. 34 - S. 19, Z. 18).

Bei der Komponente b) handelt es sich um mindestens ein, beispielsweise ein bis vier, bevorzugt ein bis drei, besonders bevorzugt ein bis zwei und ganz besonders bevorzugt genau ein hydroxygruppenhaltiges Poly(meth)acrylatpolyol. Dabei handelt es sich zumeist um Kopolymerisate von im wesentlichen (Meth)Acrylsäureestern, beispielsweise C₁-C₂₀-Alkyl(meth)acry-laten, mit Hydroxyalkyl(meth)acrylaten, beispielsweise den Mono(meth)acrylsäureestern von 1,2-Propandiol, Ethylenglykol, 1,3-Propandiol, 1,4-Butandiol oder 1,6-Hexandiol, sowie von Styrol.

Diese weisen vorzugsweise ein nach der Gelpermeationschromatographie bestimmbares Molekulargewicht Mₙ (Zahlenmittel) von 500 bis 50.000 D, insbesondere 500 bis 10.000 D oder 500 bis 5000 D auf. In einer bevorzugten Ausrührungsform weisen sie ein Molekulargewicht Mₙ von 800-2.000 D auf. Letzteres sind insbesondere Poly(meth)acrylatpolyole wie Sie für Lacke mit niedrigen Feststoffgehalten eingesetzt werden. Bevorzugte Komponenten b) weisen OH-Zahlen, gemessen gemäß DIN 53240-2:2007-11, von 15-250 mg KOH/g Festharz, bevorzugt 60-180 mg KOH/g, besonders bevorzugt 80-160 mg KOH/g auf. Zusätzlich können die Komponenten b) eine Säurezahl gemäß BS EN ISO 3682; BS 6782-3 von unter 100 mg KOH/g, bevorzugt unter 30 und besonders bevorzugt unter 20 mg KOH/g aufweisen.

Die Hydroxylgruppen aufweisenden Monomere werden in solchen Mengen bei der Kopolymerisation mitverwendet, dass die obengenannten Hydroxylzahlen der Polymerisate resultieren, die im Allgemeinen einem Hydroxylgruppengehalt der Polymerisate von 0,5 bis 8, vorzugsweise 1 bis 5 Gew.-% entsprechen. Im Allgemeinen werden die hydroxyfunktionellen Ko-Monomeren im Mengen von 3 bis 75, vorzugsweise 6 bis 47 Gew.-%, bezogen auf das Gesamtgewicht der eingesetzten Monomere mitverwendet. Außerdem muss selbstverständlich darauf geachtet werden, dass im Rahmen der gemachten Angaben die Menge der hydroxyfunktionellen Monomeren so gewählt wird, dass Kopolymerisate entstehen, die im statistischen Mittel pro Molekül mindestens zwei Hydroxylgruppen aufweisen.

Als Monomere genannt seien z.B. C₁-C₂₀-Alkyl(meth)acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen, α,β-ungesättigte Carbonsäuren und deren Anhydride und aliphatischen Kohlenwasserstoffen mit 2 bis 8 C-Atomen und 1 oder 2 Doppelbindungen. Als (Meth)acryl-säurealkylester bevorzugt sind solche mit einem C₁-C₁₀-Alkylrest, wie Methylmethacrylat, Methylacrylat, n-Butylacrylat, Ethylacrylat und 2-Ethyl-hexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat und Vinylacetat. α, β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3-oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4500, bevorzugt 250 bis 2000, Poly-1,3-propandiol oder Polypropylenglykol mit einem Molgewicht zwischen 134 und 2000 oder Polyethylenglykol mit einem Molgewicht zwischen 238 und 2000 sein. Bevorzugt sind 2-Hydroxyethylacrylat, 2-Hydroxy-ethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, 4-n-Butyl-styrol, 4-n-Decylstyrol und vorzugsweise Styrol in Betracht. Beispiele für Nitrile sind Acrylnitril und Methacrylnitril. Geeignete Vinylether sind z.B. Vinylmethylether, Vinylisobutylether, Vinylhexylether und Vinyloctylether. Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt. Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Ko-Monomere wie z.B. Glycidylacrylat oder -methacrylat oder Monomere wie N-Methoxymethyl-acrylamid oder -meth-acrylamid können in geringen Mengen mitverwendet werden.

Bevorzugt sind Ester der Acrylsäure bzw. der Methacrylsäure mit 1 bis 18, vorzugsweise 1 bis 8 C-Atomen im Alkoholrest wie z.B. Methylacrylat. Ethylacrylat, Isopropyl-acrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.

Die hydroxygruppentragenden Monomere werden in die Kopolymerisation der hydroxygruppentragenden (Meth)Acrylate im Gemisch mit anderen polymerisierbaren, bevorzugt radikalisch polymerisierbaren Monomeren, eingesetzt, bevorzugt solchen, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den hydroxygruppentragenden Monomeren zu mehr als 60 Gew% aus C₁-C₁₀-Alkyl(meth)acrylaten, Styrol und dessen Derivaten oder deren Mischungen bestehen.

Die Herstellung der Polymerisate kann durch Polymerisation nach üblichen Verfahren durchgeführt werden. Vorzugsweise erfolgt die Herstellung der Polymerisate in einer Emulsionspolymerisation oder in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen. Als Lösungsmittel kommen beispielsweise Aromaten, wie Solventnaphtha, Benzol, Toluol, Xylol, Chlorbenzol, Ester wie Ethylacetat, Butylacetat, Methylglykolacetat, Ethylglykol-acetat, Methoxypropylacetat, Ether wie Butylglykol, Tetrahydrofuran, Dioxan, Ethyl-glykolether, Ketone wie Aceton, Methylethylketon, halogenhaltige Lösemittel wie Methylenchlorid oder Trichlormonofluorethan in Betracht.

Als optionale weitere Komponente gemäß der vorliegenden Erfindung verwendet man mindestens ein, beispielsweise ein bis drei, bevorzugt ein bis zwei und besonders bevorzugt genau ein Polyesterpolyol. Das zahlenmittlere Molekulargewicht Mn ist vorzugsweise mindestens 500 g/mol, bevorzugt mindestens 700 g/mol. Die obere Grenze des Molekulargewichts Mₙ ist bevorzugt 30.000 g/mol, besonders bevorzugt 10.000 g/mol, ganz besonders bevorzugt 4.000 g/mol. Ein einer bevorzugten Ausführungsform beträgt das Molekulargewicht Mₙ von 500 bis 4000, insbesondere von 700 bis 2.000 g/mol. Die Polydispersität M_{w}/Mₙ ist vorzugsweise von 1,1 - 50, besonders bevorzugt kleiner oder gleich 5, insbesondere kleiner 3,5.

Die Polyesterpolyole sind im Wesentlichen Umsetzungsprodukte von mehrwertigen Säuren oder deren Derivaten und mehrwertigen Alkoholen. Mehrwertige Säuren sind beispielsweise Dicarbonsäuren, Tricarbonsäuren und Polycarbonsäuren. Mehrwertige Alkohole sind beispielsweise Diole oder Triole.

Zu den Dicarbonsäuren gehören beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie zum Beispiel Phthalsäure, Isophthalsäure oder Terephthalsäure verwendet werden. Auch ungesättigte Dicarbonsäuren, wie Maleinsäure oder Fumarsäure sind einsetzbar, wenn auch weniger bevorzugt. Bevorzugt ist Hexahydrophthalsäureanhydrid.

Die genannten Dicarbonsäuren können auch substituiert sein mit einem oder mehreren Resten, ausgewählt aus: C₁-C₂₀-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, Trimethylpentyl, n-Nonyl, n-Decyl, n-Dodecyl, n-Octadecyl und n-Eicosyl; C₃-C₁₂-Cycloalkyl-gruppen, beispielsweise Cyclopropyl, Cyclobutyl, Cyclopentyl, Cyclohexyl, Cycloheptyl, Cyclo-octyl, Cyclononyl, Cyclodecyl, Cycloundecyl und Cyclododecyl; bevorzugt sind Cyclopentyl, Cyclohexyl und Cycloheptyl; Alkylengruppen wie Methylen oder Ethyliden; oder C₆-C₁₄-Aryl-gruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Octadecenylbernsteinsäure und dessen Anhydrid (siehe unten), 2-Ethylbernsteinsäure, 2-Phenylbernsteinsäure, Itaconsäure, 3,3-Dimethylglutarsäure. Weiterhin lassen sich Gemische von zwei oder mehreren der vorgenannten Dicarbonsäuren einsetzen.

Die Dicarbonsäuren lassen sich entweder als solche oder in Form von Derivaten einsetzen. Unter Derivaten werden bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkompo-nenten, besonders bevorzugt gemischte Methylethylester.

C₁-C₄-Alkyl bedeutet im Rahmen dieser Schrift Methyl, Ethyl, *iso*-Propyl, n-Propyl, n-Butyl, *iso*-Butyl, *sek*-Butyl und *tert*-Butyl, bevorzugt Methyl, Ethyl und n-Butyl, besonders bevorzugt Methyl und Ethyl und ganz besonders bevorzugt Methyl.

Es ist auch möglich, ein Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Dicarbonsäuren einzusetzen. Optionale Dicarbonsäuren sind insbesondere Malonsäure, Sebacinsäure, Bernsteinsäure, Glutarsäure, Adipinsäure, 1,2- Cyclohexandicarbonsäure (Hexahydrophthalsäure), 1,3- oder 1,4-Cyclohexandicarbonsäure, Phthalsäure, Isophthalsäure, Terephthalsäure oder deren Mono- oder Dialkylester.

Tricarbonsäuren oder Polycarbonsäuren sind beispielsweise Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren. Der Index "x" steht dabei für die Funktionalität an Carboxygruppen, für die "A" steht, wobei gilt x≥3, bevorzugt x=3 oder 4 und besonders bevorzugt x=3. Tricarbonsäuren oder Polycarbonsäuren (Aₓ) lassen sich in der erfindungsgemäßen Reaktion entweder als solche oder aber in Form von Derivaten einsetzen.

Unter Derivaten werden bevorzugt verstanden
- die betreffenden Anhydride in monomerer oder auch polymerer Form,
- Mono- Di- oder Trialkylester, bevorzugt Mono- Di-, oder Tri-C₁-C₄-alkylester, besonders bevorzugt Mono-, Di- oder Trimethylester oder die entsprechenden Mono-, Di- oder Triethylester,
- ferner Mono-, Di- und Trivinylester sowie gemischte Ester, bevorzugt gemischte Ester mit unterschiedlichen C₁-C₄-Alkylkomponenten, besonders bevorzugt gemischte Methylethylester.

Es ist auch möglich, ein Gemisch aus einer Tri- oder Polycarbonsäure und einem oder mehreren ihrer Derivate einzusetzen, zum Beispiel eine Mischung aus Pyromellitsäure und Pyromellitsäuredianhydrid. Gleichfalls ist es im Rahmen der vorliegenden Erfindung möglich, ein Gemisch mehrerer verschiedener Derivate von einer oder mehreren Tri- oder Polycarbonsäuren einzusetzen, zum Beispiel eine Mischung aus 1,3,5-Cy-clohexantricarbonsäure und Pyromellitsäuredianhydrid.

Als Diole als Bausteine für die Polyesterpolyole verwendet man beispielsweise Ethylenglykol, Propan-1,2-diol, Propan-1,3-diol, 2-Butyl-2-ethyl-1,3-propandiol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)-cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentan-diol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylen-polypropylenglykole, wobei die Abfolge der Ethylenoxid- der Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voranstehenden Verbindungen. Dabei kann eine oder auch beide Hydroxylgruppen in den vorstehend genannten Diolen durch SH-Gruppen substituiert werden. Bevorzugt eingesetzte Diole sind Ethylenglykol, 1,2-Propandiol, 1,3-Propandiol, 2-Butyl-2-ethyl-1,3-pro-pandiol, 1,4-Bu-tandiol, 1,5-Pentandiol, Neopentylglykol, 1,6-Hexandiol, 1,8-Octandiol, 1,2-, 1,3- und 1,4-Cyclo-hexandiol, 1,3- und 1,4-Bis(hydroxymethyl)cyclo-hexan, sowie Diethylenglykol, Triethylenglykol, Dipropylenglykol und Tripropylenglykol.

Mindestens trifunktionelle Alkohole als Bausteine der Polyesterpolyole umfassen Trimethylolpropan, Glycerin, Trimethylolmethan, Trimethylolethan, 1,2,4-Butantriol, Tris(hydroxy-methyl)amin, Tris(hydroxyethyl)amin, Tris(hydroxy-propyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxy-ethyl)isocyanurat (THEIC), Tris(hydroxypropyl)isocyanurat, Inositole oder Zucker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid und/oder Butylenoxid. Dabei sind Glycerin, Diglycerin, Triglycerin, Trimethylolethan, Di-Trimethylolpropan, 1,2,4-Butantriol, Pentaerythrit, Tris(hydroxyethyl)isocyanurat sowie deren Polyetherole auf Basis von Ethylenoxid und/oder Propylenoxid besonders bevorzugt. Ganz besonders bevorzugt sind Glycerin, Di-Trimethylolpropan und Pentaerythrit. Der Index "y" steht dabei für die Funktionalität an Hydroxygruppen, für die "B" steht, wobei gilt y≥3, bevorzugt y=3 oder 4 und besonders bevorzugt y=3.

Die Polyesterpolyole können in An- oder Abwesenheit von Katalysatoren hergestellt werden.

Die Polyesterpolyole können funktionalisiert sein, sind es aber bevorzugt nicht.

Die erfindungsgemäßen zweikomponentigen Polyurethanbeschichtungsmassen weisen in der Regel eine Stöchiometrie von Isocyanatgruppen in a) zu gegenüber Isocyanat reaktiven Gruppen in b) von 0,5:1 bis 2:1, bevorzugt 0,7:1 bis 1,3:1, besonders bevorzugt 0,8:1 bis 1,2:1 und speziell 0,9:1 bis 1,1:1 auf.

Das Gewichtsverhältnis der Komponenten Poly(meth)acrylatpolyol b) : Polyesterpolyol kann 1,5:1 bis 99:1 betragen, vorzugsweise 2,3:1 bis 20:1 und speziell von 2,7:1 bis 20:1, jeweils bezogen auf Feststoff.

In einer bevorzugten Ausführungsform liegt kein Polyesterpolyol vor.

Als Komponente c) wird mindestens eine, beispielsweise eine bis zwei und bevorzugt genau eine Lewis-Base als Urethanisierungskatalysator eingesetzt.

Urethanisierungskatalysatoren sind Verbindungen, die die Umsetzung von Isocyanatgruppen mit gegenüber Isocyanat reaktiven Gruppen zu beschleunigen vermögen. Verbindungen, die die Umsetzung von Isocyanatgruppen mit gegenüber Isocyanat reaktiven Gruppen zu beschleunigen vermögen, sind solche Verbindungen, die durch ihre Anwesenheit in einem Eduktgemisch zu einem höheren Anteil an urethangruppenhaltigen Reaktionsprodukten führen als das gleiche Eduktgemisch in deren Abwesenheit unter denselben Reaktionsbedingungen. Die Lewis-Base c) kann bevorzugt einen pKa-Wert von über 8 aufweisen. Die Bestimmung des pKa Wertes erfolgt in Wasser. In einer bevorzugten Ausführungsform der vorliegenden Erfindung ist die Lewis-Base c) ein organisches Amin. Insbesondere ist die Lewis-Base c) ausgewählt aus der Gruppe bestehend aus tertiären aliphatischen, cycloaliphatischen, aromatischen Aminen, Amidinen, Guanidinen und amingruppenhaltigen ionischen Flüssigkeiten.

Besonders bevorzugte organische Amine sind cycloaliphatische und aliphatische Amine. Aliphatische Amine sind beispielsweise Triethylamin, N-Methylmorpholin, N,N-Dimethyl-cyclohexylamin, N,N'-Dimethylpiperazin, N,N-Dimethylethanolamin und N,N,N',N',N"-Pentamethyl-diet-hylenetriamin. Ganz besonders bevorzugte organische Armine sind cylcoaliphatische Amine. Dieses sind beispielshaft Triethylendiamin (TEDA, 1,4-Diazabicyclo-[2.2.2]-oktan), 1,8-Diazabicyclo-(5.4.0)-undekan (DBU) und 1,5-Diazabicyclo-[4.3.0]-non-5-en (DBN).
Ionische Flüssigkeiten sind hier als Salze zu verstehen, die einen Schmelzpunkt von unter 100 °C aufweisen. Bevorzugt liegt dieser unter 60 °C, besonders bevorzugt unterhalb 23 °C. Bevorzugte amingruppenhaltige ionische Flüssigkeiten sind Imidazoliumsalze der Formel 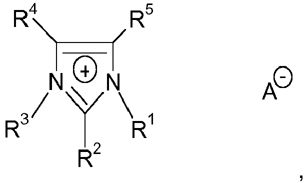 worin R¹ und R³ unabhängig voneinander für einen organischen Rest mit 1 bis 20 C-Atomen stehen, R², R⁴ und R⁵ unabhängig voneinander für ein H-Atom oder einen organischen Rest mit bis zu 20 C-Atomen stehen und A⁻ für ein Anion steht. Bevorzugt kann es sich bei dem Anion A⁻ um Carboxylatanionen handeln, bei denen es sich um Anionen von aliphatischen oder aromatischen Carbonsäuren. Als Beispiele von aromatischen Carbonsäuren sind Benzoat, Salicylat und Nicotinat erwähnt. Bevorzugt sind 1-Ethyl-3-methyl-imidazolium-carboxylate, insbesondere 1-Ethyl-3-methyl-imidazolium-benzoat.

Die Lewis-Base c) liegt bevorzugt in Mengen < 5%, besonders bevorzugt < 4%, ganz besonders bevorzugt < 2%, bezogen auf Polyol (fest) in den zweikomponentigen Beschichtungsmassen vor.

Des Weiteren ist noch ein Lösungsmittel oder Lösungsmittelgemisch d) anwesend.

Als Lösungsmittel für die Polyisocyanatkomponente, wie auch die Bindemittel- und ggf. weitere Komponenten einsetzbar sind solche, die keine gegenüber Isocyanatgruppen oder verkappten Isocyanatgruppen reaktiven Gruppen aufweisen und in denen die Polyisocyanate zu mindestens 10 Gew%, bevorzugt zu mindestens 25, besonders bevorzugt zu mindestens 50, ganz besonders bevorzugt zu mindestens 75, insbesondere zu mindestens 90 und speziell zu mindestens 95 Gew% löslich sind.

Beispiele für derartige Lösungsmittel sind aromatische (einschließlich alkylierter Benzole und Naphthaline) und/oder (cyclo)aliphatische Kohlenwasserstoffe und deren Gemische, chlorierte Kohlenwasserstoffe, Ketone, Ester, alkoxylierte Alkansäurealkylester, Ether, respektive Gemische der Lösungsmittel.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 -207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen. Der Gehalt an aliphatischen Kohlenwasserstoffen beträgt in der Regel weniger als 5, bevorzugt weniger als 2,5 und besonders bevorzugt weniger als 1 Gew%.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon und tert.-Butylmethylketon.

Bevorzugte Lösungsmittel sind n-Butylacetat, Ethylacetat, 1-Methoxypropylacetat-2, 2-Methoxyethylacetat, sowie deren Gemische, insbesondere mit den oben aufgeführten aromatischen Kohlenwasserstoffgemischen, insbesondere Xylol und Solvesso® 100.

Bevorzugt sind Butylacetat, 1-Methoxypropylacetat-2, Methylamylketon, Xylol und Solvesso® 100.

Als lacktypische Additive e) in den Beschichtungsmassen können beispielsweise eingesetzt werden: UV-Stabilisatoren wie UV-Absorber und geeignete Radikalfänger (insbesondere HALS-Verbindungen, Hindered Amin Light Stabilizer), Katalysatoren (Aktivatoren, Beschleuniger), Trockenmittel, antistatische Agentien, Flammschutzmittel, Verdicker, thixotrope Agentien, oberflächenaktive Agentien, Viskositätsmodifikatoren, Plastifizierer oder Chelatbildner.

Geeignete UV-Absorber umfassen Oxanilide, Triazine und Benzotriazol (letztere erhältlich z.B. als Tinuvin® -Marken der BASF SE) und Benzophenone (z.B. Chimassorb® 81 der BASF SE). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1,-dimethylethyl)-4-hydroxyphenyl]-1-oxopropyl]-ω-hydroxypoly(oxo-1,2-ethanediyl) (z.B. Tinuvin® 1130), jeweils Produkte z.B. der BASF SE. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der BASF SE. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]-methyl]butylmalonat (z.B. Tinuvin® 144 der BASF SE); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der BASF SE); oder die N-(O-Alkyliert) sind, wie z.B. Dekandisäure,bis(2,2,6,6-tetramethyl-1-(octyloxy)-4-piperidinyl)ester, Reaktionsprodukte mit 1,1-Dimethylethylhydroperoxyd und Oktan (z.B. Tinuvin® 123 der BASF SE). UV-Stabilisatoren werden üblicherweise in Mengen von 0,1 bis 5,0 Gew.-%, bevorzugt 2-4 Gew.% bezogen auf die in der Zubereitung enthaltenen festen Komponenten, eingesetzt.

Als Verdicker kommen neben radikalisch (ko)polymerisierten (Ko)Polymerisaten, übliche organische und anorganische Verdicker wie Hydroxymethylcellulose oder Bentonit in Betracht. Als Chelatbildner können z.B. Ethylendiaminessigsäure und deren Salze sowie β-Diketone verwendet werden.

Weiterhin können noch als weitere Komponente f) optional Füllstoffe, Farbstoffe und/oder Pigmente enthalten sein. Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel". Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium. Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden, beispielsweise wie in Schritt a) beschrieben. Beispielsweise können alle Pigmentkomponenten eines standardisierten Mischlacksystems zugrunde liegen. Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente. Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf. Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensations-produkte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt. Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Die Herstellung der erfindungsgemäßen Beschichtungen erfolgt in einem Temperaturbereich bis 80°C, bevorzugt in einem Temperaturbereich von 0°C bis 80°C, besonders bevorzugt in einem Temperaturbereich von Umgebungstemperatur bis 80°C. Als Umgebungstemperatur wird üblicherweise die Temperatur verstanden, in dem das beschichtete Substrat bestimmungsgemäß verwendet wird.

In der Regel werden zur Herstellung der erfindungsgemäßen Beschichtungen das Polyisocyanat a) sowie das Bindemittel b) in dem gewünschten Molverhältnis von Isocyanatgruppen in a) und zu gegenüber Isocyanat reaktiven Gruppen in b) miteinander vermischt. Die Katalysatoren c) und Lösungsmittel d) und optional noch weitere Lackkomponenten e) und f) werden entsprechend vorher in eine der beiden Komponenten eingemischt. Abschließend wird die Mischung aus Polyisocyanatkomponente enthaltend das Polyisocyanat a) und Bindemittelkomponente enthaltend das Bindemittel b) auf das Substrat aufgetragen und das Lackgemisch ausgehärtet.

Die Beschichtung der Substrate erfolgt in der Regel nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Beschichtungsmasse, gegebenenfalls unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen. Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Anschließend an das Auftragen der Beschichtungsmasse wird in der Regel bei Umgebungstemperatur bis 80 °C, bevorzugt 0 bis 80 °C, besonders bevorzugt bei Umgebungstemperatur bis 80°C das Lackgemisch ausgehärtet. Dies erfordert insbesondere bei erhöhter Temperatur in der Regel nicht mehr als 2 Stunden, insbesondere nicht mehr als 1 Stunde, z.B. 10-40 Minuten. Die Härtung kann auch mit Hilfe von Infrarotstrahlung erfolgen bzw. unterstützt werden.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können. Bevorzugt sind Holz, Metalle und Kunststoffe, die optional vorbeschichtet oder vorbehandelt sein können. Besonders bevorzugt sind Metalle und Kunststoffe.

Derartige Beschichtungsmassen eignen sich als oder in Innen- oder Außenbeschichtungen, also solche Anwendungen, die dem Tageslicht ausgesetzt sind, von Beschichtungen auf (Groß-)Fahrzeugen und Flugzeugen und industriellen Anwendungen, Eisenbahnen, Nutzfahrzeuge im landwirtschaftlichen und Baubereich, insbesondere sogenannte ACE (agricultural, construction and earthmoving equipment), Windenergieanlagen, Brücken, Strommasten, Tanks, Containern, Pipelines, Kraftwerken, chemischen Anlagen, Schiffen, Kränen, Hallen, Dächern, Möbeln, Fenstern, Türen, Parkett, Papier, Karton, für Bodenbeläge, wie bei Parkdecks oder in Krankenhäusern und insbesondere in Automobillacken als refinish-Anwendung. Bevorzugt sind refinish, Kunststoff- und Industrieanwendungen, z.B. ACE.

Insbesondere werden die erfindungsgemäßen Beschichtungsmassen in Lackapplikationen verwendet, bevorzugt als Klarlack, Basislack, Decklack, Primer oder Füller, insbesondere als Klarlack oder Decklack.

Die erfindungsgemäßen Beschichtungsmassen weisen insbesondere eine schnelle Trocknung und Pendelhärteentwicklung bei Temperaturen bis 80 °C und eine gute Chemikalienbeständigkeit auf.

Die Härtung erfolgt bevorzugt in weniger als 4 h, besonders bevorzugt in weniger als 2 h, besonders bevorzugt unter 1 h bei erhöhter Temperatur. Danach kann noch eine Nachhärtung bei Raumtemperatur erfolgen.

### Beispiele:

### Testmethoden:

Die Bestimmung von Hydroxylzahlen der verzweigten Polyesterole basiert auf DIN 53240-2:2007-11. Bei der Berechnung wird die Säurezahl berücksichtigt.

Die Bestimmung von Säurezahlen der verzweigten Polyester erfolgt gemäß DIN EN ISO 2114:2000, Verfahren A.

Viskositäten werden bei 23 °C gemäß DIN EN ISO 3219/A.3 in einem Kegel-Platte-System mit einem Geschwindigkeitsgefälle von 1000 s⁻¹ angegeben

Die Bestimmung der Molmassen und Polydispersitäten erfolgt durch Gelpermeationschromatographie mit TÜV-zertifizierten PMMA-Standards von PSS (Polymer Standards Service; DIN EN ISO 9001:2000, Zertifikat: 01 100 84065.). Diese Standards sind nach den Anforderungen von DIN 55672 und ISO/EN 13885 charakterisiert.
Die GPC erfolgt mit:
Gerät: PSS Agilent Technologies 1260 Infinity
Säulen: 1x PLGel Mixed E Guard (Vorsäule), Länge 5 cm, Durchmesser 0,75 cm
   1x PLGel Mixed E, Länge 30 cm, Durchmesser 0,75 cm
   1x PLGel Resipore, Länge 30 cm, Durchmesser 0,75 cm
Lösungsmittel: THF
Flussrate: 1 mL/min
Injektionsvolumen: 50 µL
Konzentration: 1 g/L
Temperatur: Raumtemperatur (20 °C)

Der Nicht-flüchtige Anteil (NfA) wurde nach thermo-gravimetrischem Prinzip mithilfe eines Moisture Analyzer HB43-S der Firma Mettler Toledo bestimmt. Dazu wurden etwa 2 g der Probe in eine Aluminium-Probenschale mit einem Durchmesser von 90 mm (HA-D90) eingewogen und bis zur Gewichtskonstanz auf 150 °C aufgeheizt.

Die Auslaufzeit wurde auf Basis ISO 2431 und EN 535 mit einem DIN 4-Becher bestimmt, und auf ca. 20 Sekunden bei RT eingestellt.

Zur Bestimmung der Gelzeit wurde der flüssige Lack direkt nach dem Ansetzen in ein Reagenzglas (20 mm x 180 mm), welches am unteren Ende einen Kupferaufkleber (ca. 5 mm x 5 mm) aufweist, gefüllt. Das Reagenzglas war dabei zu mindestens 60 % gefüllt. Das Reagenzglas wurde in einen Slot des Gelzeitgerätes gestellt. Dabei wurde ein Kontakt zwischen Kupferaufkleber und Gelzeitgerät geschlossen. Eine Metallspeiche mit gebogener Spitze wurde bei 22 cm Länge in den Speichenhalter eingespannt. Dann wurde der Speichenhalter ins Gerät eingesetzt. Dabei tauchte die Speiche in den flüssigen Lack ein. Die Öffnung des Reagenzglases wurde durch einen gelochten Deckel verschlossen. Die Speiche wurde durch das Loch im Deckel geführt. Bei Inbetriebnahme des Gerätes wurde ein Counter gestartet. Des Weiteren bewegte der Apparat die Speiche in der Probe nach oben und unten bis diese fest wurde bzw. gelierte. Beim darauf folgenden Anheben des Reagenzglases ging der Kontakt des Kupferaufklebers verloren und der Counter des Geräts wurde automatisch gestoppt. Die Messung erfolgte bei 23 ± 2 °C und 50 ± 10 % Luftfeuchte.

### Anwendungstechnik:

Es wurden erfindungsgemäße Beschichtungsmassen L und nicht erfindungsgemäße Beschichtungsmassen V-L hergestellt.

Beschichtungen erfolgten mit Kastenrakel einer Trockenschichtdicke von 35-45 µm. Die Nassschichtdicken lagen bei 150 µm mit Joncryl® 507 im Klarlack

Lackfilme wurden zur Bestimmung der Pendelhärteentwicklung bei 23 ± 2 °C und 50 ± 10 % Luftfeuchte konditioniert.

Die Härtung kann auch bei höheren Temperaturen als Raumtemperatur erfolgen. Dazu wurden die Lacke für 10-15 Minuten bei Raumtemperatur abgelüftet. Eine Temperung erfolgte i.A. für 30 Minuten bei 60 °C oder bei 80 °C.

Nach der Härtung erfolgte eine Konditionierung bei 23 ± 2 °C und 50 ± 10 % Luftfeuchte, soweit nicht explizit anders benannt für 24 Stunden

Staubtrockenzeit: Zur Bestimmung der Staubtrockenzeit wurde der Lack bei Raumtemperatur auf eine Glasplatte appliziert und die Lackoberfläche in Zeitabständen mit einem Wattebausch berührt. Der Lack gilt zu dem Zeitpunkt als staubtrocken, wenn keine Watte mehr an der Oberfläche haften bleibt. Die Messung erfolgte bei Umgebungstemperatur.

Sandtrockenzeit und Durchtrockenzeit: Zur Prüfung des Trocknungsverhaltens der Lacke wurde ein mit ca. 60-80 g Sand gefüllter, mit Rädern versehener Trichter mit konstanter Vorschubgeschwindigkeit von 1 cm/h über eine frisch mit Lack beschichtete Glasplatte gezogen. Nach Ende der Prüfungen wurde die Platte vorsichtig mit einem Pinsel von losem Sand befreit. Als Sandtrocknung bezeichnet man die Zeitspanne, zwischen Beginn der Prüfung bis zum letzten, dauerhaften Anhaften der Sandkörner. Die Durchtrocknung wurde ermittelt als die Zeit, in der die Räder des Trichters noch eine Spur im Lack hinterließen. Die Trocknung erfolgt bei 23 ± 2 °C und 50 ± 10 % Luftfeuchte. Die Messungen erfolgten bei 23 ± 2 °C und 50 ± 10 % Luftfeuchte.

Die Pendelhärte wurde nach König auf Glasplatten (isotherm) oder -Tiefziehblech (Gradientenofen 80-180 °C) bestimmt (DIN EN ISO 1522)
Die Erichsen-Tiefung wurde nach DIN EN ISO 1520 auf einem Tiefziehblech ermittelt
Der Gitterschnitt wurde nach DIN EN ISO 2409 auf einem Bonderblech ermittelt.

Der Glanz des Lackes wurde mittels eines Mikro TRI-Gloss Messgerätes bestimmt.

Zur Bestimmung der Chemikalienbeständigkeit für Automobilanwendungen wurde ein lackiertes Tiefziehblech (Gradientenofenblech) 30 Minuten bei 60 °C oder 80 °C und 16-24 h bei (23 ± 2) °C und (50 ± 10) % Luftfeuchte gehärtet. Danach wurden mit einer Eppendorf-Pipette pro Heizelement (30-75 °C) Tropfen der Testsubstanzen Schwefelsäure (1%ig; 25 µl), Natronlauge (1%ig; 25µl), Pankreatin (50 µl) und Baumharz (25 µl) aufgegeben. Bei den letzten zwei Agenzien wurde jedes zweite Heizelement übersprungen. Anschließend wurde das Prüfblech in den Gradientenofen (Fa. BYK Gardner) gelegt und 30 Minuten bei 30-75 °C temperiert. Nach Beendigung dieses Vorgangs wurde das Blech mit VE-Wasser von der Schwefelsäure und der Natronlauge gereinigt. Anschließend wurde das Blech mit warmem Wasser und einem weichen Tuch vom anhaftenden Pankreatin gereinigt. Danach wurde das Baumharz mit einem weichen Lappen und Waschbenzin gründlich, jedoch schonend gereinigt. Das Blech wurde abschließend mit kaltem Wasser gründlich jedoch schonend abgewaschen und die restlichen Wassertropfen mit einem weichen Papiertuch entfernt. Nach 24 h Konditionierung bei 23 ± 2 °C und 50 ± 10 % Luftfeuchte erfolgte die Beurteilung. Es wurde die Temperatur notiert, bei welcher der erste Angriff auf die Beschichtung unter künstlichem Licht erkennbar ist.

Quelle des Baumharzes Fa. Wörwag, Baumharzlösung DBL 5416 Nr.: 701014
Pankreatin (Fa. Merck. Art. 7130) wird mit VE-Wasser 1:1 Gew.-% in einem Porzellanmörser gemischt.

**Einsatzstoffe:**

| | |
|---|---|
| Basonat® HI 100 | Isocyanurat, ca. 2800 mPa*s, 22,0 % NCO-Wert, Produkt der BASF SE |
| Joncryl® 507: | Polyacrylatol, OH-Zahl 140 mg KOH/g, Säurezahl 7 mg KOH/g, 80 % Feststoffgehalt in Butylacetat; BASF SE, Ludwigshafen |
| DABCO TMR® | N-(2-Hydroxypropyl)-N,N,N-trimethyl-ammonium-2-ethylhexanoat, 75 % in Ethylenglycol, Produkt der Air Products |
| DBTL | Dibutylzinndilaurat, Katalysator, Aldrich |
| Borchi® Kat 22 | Zink-bis-(2-ethyl-hexanoat), 100%, OMG Borchers |

### Herstellung von Pentamethylendiisocyanat:

In einem 500 ml Rundkolben mit Gaseinleitungsrohr, Rührer und einer Intensivkühlerkaskade aus einem -10°C Intensivkühler und einem -78°C kalten Wächterkühler werden 51,1 g des 1,5-Pentandiamins in 459,9 g ortho-Dichlorbenzol bei Raumtemperatur gelöst.

In diese Lösung wird nun bei 80°C über 2 h 37 g Chlorwasserstoff eingeleitet und es bildet sich eine Suspension. Diese Suspension wird weitere 2 h bei 80°C gehalten.

In diese Suspension wird nun Phosgen eingeleitet, bis sich ein gelinder Rückfluss einstellt. (ca. 15 g Phosgen).

Nach 1 h Rühren bei RT wird die Suspension auf 155°C erwärmt. Dabei wird in dem Maße Phosgen eingeleitet wie Phosgen verbraucht wird, so dass beständig ein leichter Phosgenrückfluss zu beobachten ist. Die Suspension löst sich im Verlauf der Reaktion vollständig auf und nach 21 h bei 155°C erhält man eine klare braune Lösung aus der beim Abkühlen und Entphosgenieren kein 1,5-Pentandiamin mehr nachzuweisen ist. Danach werden alle flüchtigen Bestandteile fraktioniert destilliert. Man erhält 57 g (73% d. Th.) einer farblosen Flüssigkeit, die das gewünschte Diisocyanat ist.

### Herstellung des Isocyanurats des Pentamethylendiisocyanats

### Beispiel PI1:

132 g Pentamethylendiisocyanat entsprechend der obigen Synthese (NCO-Gehalt 54,3 %) wurden mit 341 ppm DABCO TMR, 7,5%-ig in 2-Ethylhexanol (600 mg Katalysatorlösung), in einem Dreihalskolben mit Rührer bei 75-78 °C umgesetzt. Nach 30 min wurde ein NCO-Gehalt von 44,6% erhalten und mit 432 mg einer Lösung von Hydroxyethylcarbamat [HOCH2CH2OC(=O)NH2], 10%-ig in Methylglycol, chemisch gestoppt. Es wurde bei 150 °C / 1 mbar destilliert und in ca. 33% Ausbeute ein erfindungsgemäßes Produkt mit einem NCO-Gehalt von 24,1 %, 3180 mPa*s, erhalten.

### Beispiel PI2:

800 g Pentamethylendiisocyanat entsprechend der obigen Synthese (Farbzahl 3 Hz; NCO-Gehalt 54,4 %) wurden mit 232 ppm DABCO TMR, 7,5%-ig in 2-Ethylhexanol (2477 mg Katalysatorlösung), in einem Dreihalskolben mit Rührer bei 75-84 °C umgesetzt. Nach 50 min wurde ein NCO-Gehalt von 45,5% erhalten und mit 1,63 g einer Lösung von Hydroxyethylcarbamat, 10% in Methylglykol chemisch gestoppt. Es wurde bei 153 °C / 1 mbar destilliert und in ca. 33 % Ausbeute ein erfindungsgemäßes Produkt mit einem NCO-Gehalt von 24,4 %, 2840 mPa*s, und 0% Rest-HDI-Gehalt erhalten.

### Beispiel PI3:

429 g zweimal frisch destilliertes Pentamethylendiisocyanat entsprechend der obigen Synthese (Farbzahl 2 Hz) wurden mit in Summe 171 ppm N-Benzyl-N,N,N-trimethylammonium-2-hydroxy-isobutyrat-Katalyator, 5 %-ig in 2-Ethylhexanol, in einem Dreihalskolben mit Rührer bei 110 °C umgesetzt. Anfangs wurden 684 mg, nach 10 Minuten weitere 271 mg, nach 20 min nochmals 516 mg Katalysator-Lösung zugegeben. Mit der letzten Zugabe erwärmte sich die Lösung auf 170 °C und das Produkt wurde bei dieser Temperatur thermisch gestoppt. Zusätzlich wurde das Produkt mit 572 mg einer 5 %-igen Lösung von Diethylhexylphosphat in 2-Ethylhexanol, (30 mol% bezogen auf den Katalysator) stabilisiert. Das Produkt wurde bei 170 °C und 2 mbar von dem Monomer in einer Ausbeute von 37% abgetrennt. Es wurde ein Produkt mit einem NCO-Gehalt von 22,7 %, und 5200 mPa*s erhalten.

### Anwendungstechnische Versuche:

### Versuchsreihe 1:

Vergleich der Lackzusammensetzungen und anwendungstechnischen Ergebnisse des erfindungsgemäßen Polyisocyanurats PI3 auf Basis PDI mit dem nicht erfindungsgemäßen Polyisocyanurat HI1 auf Basis HDI in Kombination mit dem Polyacrylatpolyol Joncryl 507 unter basischer Katalyse mit 1,4-Diazabicyclo-[2.2.2]-oktan (TEDA. 1,3 und 1,4 % / Polyol fest). Desgleichen Vergleich zu PI3 und HI1 unter metallorganischer Katalyse mit DBTL (100 ppm / Polyol fest) und Borchi® Kat 22 (1000 ppm / Polyol fest).

| Menge [g]/Test | NfA | L1 | V-L1 | V-L2 | V-L3 | V-L4 | V-L5 | V-L6 |
|---|---|---|---|---|---|---|---|---|
| Joncryl® 507 | 80 % | 60,0 | 60,0 | 60,0 | 60,0 | 60,0 | 60,0 | 60,0 |
| PI3 | 100 % | 22,2 | | | 22,16 | | 22,16 | |
| Basonat HI 100 | 100 % | | 22,9 | 22,9 | | 22,87 | | 22,9 |
| 1,4-Diazabicyclo-[2.2.2] oktan in Butylacetat | 10 % | 6,24 | 6,24 | 6,72 | | | | |
| DBTL | 1 % | | | | 0,48 | 0,48 | | |
| Borchi® Kat 22, 10% in Butylacetat | 10 % | | | | | | 0,48 | 0,48 |
| Butylacetat | 0% | 27,5 | 27,5 | 27,0 | 32,5 | 32,0 | 32,5 | 31,8 |
| Auslaufzeit | s | 20,1 | 20,1 | | 19,9 | 19,8 | 20,2 | 19,8 |
| Nicht flüchtiger Anteil | % | 61,1 | 61,3 | | 60,9 | 61,4 | 61,6 | 61,6 |
| Gelzeit | h (dec) | 2,31 | 3,15 | 2,37 | 6,22 | 5,05 | 16,3 | 15,0 |
| Staubtrocken | min | 66 | 143 | 120 | >480 | >480 | >300 | >300 |
| Sandtrocken | h | 1,8 | 3,5 | 2,5 | 19,5 | 17,8 | 16,5 | 13,3 |
| Durchtrocken | h | 2,25 | 1,75 | 2,5 | >24 | >24 | >20 | 5 |
| Pendelhärte 6 h RT | Schläge | 26 | 14 | 17 | --- | --- | --- | --- |
| Pendelhärte 1 d RT | Schläge | 48 | 51 | 42 | 3 | 3 | 12 | 15 |
| Pendelhärte 2 d RT | Schläge | 51 | 53 | | 33 | 25 | 40 | 39 |
| Pendelhärte 60 °C | Schw. | 97 | 84 | 80 | 12 | 11 | 21 | 23 |
| Erichsen 60 °C | mm | 9,3 | 10 | 9,4 | 9 | 9 | 10 | 10 |
| Gitterschnitt 60 °C | Note | 3,5 | 3 | 5 | 0 | 0 | 1 | 1 |
| Glanz 60 °C | GU 20° | 89 | 88 | 94 | 92 | 92 | 88 | 87 |
| 1% H2SO4, 60 °C | °C | 38 | 36 | | 40 | 41 | 30 | 32 |
| 1% NaOH, 60 °C | °C | 46 | 41 | | 50 | 50 | 43 | 33 |
| Pankreatin, 60 °C | °C | 37 | 39 | | 42 | 44 | 36 | 42 |
| Baumharz, 60 °C | °C | 30 | 30 | | 30 | 30 | 30 | 30 |
| Pendelhärte 80°C | Schläge | 82 | 82 | 76 | 55 | 39 | 44 | 47 |
| Erichsen 80 °C | mm | 9,3 | 9,7 | 9,8 | 9 | 9 | 10 | 10 |
| Gitterschnitt 80 °C | Note | 3,5 | 3 | 5 | 0 | 0 | 2 | 2 |
| Glanz 80 °C | GU 20° | 94 | 95 | 95 | 92 | 93 | 95 | 93 |
| 1% H2SO4, 80 °C | °C | 36 | 32 | | 42 | 44 | 35 | 37 |
| 1% NaOH, 80 °C | °C | 30 | 30 | | 51 | 58 | 37 | 32 |
| Pankreatin, 80 °C | °C | 39 | 36 | | 40 | 56 | 32 | 36 |
| Baumharz, 80 °C | °C | 30 | 30 | | 30 | 30 | 30 | 30 |

Die Versuchsdaten zeigen, dass der erfindungsgemäße Lack L1 auf Basis PI3 gegenüber den Vergleichslacken V-L1 (gleiche Katalysatormenge wie PI3) und V-L2 (gleiche Gelzeit wie PI3) ein besseres Trockenverhalten und höhere Chemikalienbeständigkeit (Daten nur für V-L1) aufweist. Die Vergleichslacke V-L3/V-L4 mit DBTL und V-L5/V-L6 mit Zinkoctanoat als metallorganischen Katalysatoren zeigen bei niedrigen Temperaturen in dieser Einstellung mit den Katalysatormengen deutlich längere Trocknungszeiten/schlechtere Pendelhärten.

Die Härtung mit DBTL und Zinkoctanoat-Katalyse ist für Basonat® HI100 besser als für PI3. Eine Verbesserung der Trocknung/Pendelhärten bei niedrigen Temperaturen durch den Einsatz des erfindungsgemäßen Isocyanurats des Pentamethylendiisocyanats gegenüber dem HDI-Isocyanurat findet sich lediglich bei basischer TEDA-Katalyse.

## Patentansprüche

1. Verwendung einer zweikomponentigen Beschichtungsmasse, enthaltend
a) mindestens ein Polyisocyanat erhältlich durch Umsetzung von Pentamethylendiisocyanat
b) mindestens ein hydroxyfunktionelles Poly(meth)acrylatpolyol
c) mindestens eine Lewis-Base als Urethanisierungskatalysator
d) mindestens ein organisches Lösungsmittel
e) optional andere lacktypische Additive
f) optional Füllstoffe, Farbstoffe und/oder Pigmente,
zur Herstellung von Beschichtungen in einem Temperaturbereich bis zu 80°C.

2. Verwendung einer zweikomponentigen Beschichtungsmasse gemäß Anspruch 1, **dadurch gekennzeichnet, dass** das Polyisocyanat a) ausgewählt ist aus der Gruppe bestehend aus Isocyanuraten, Urethanen und Allophanaten.

3. Verwendung einer zweikomponentigen Beschichtungsmasse gemäß Anspruch 1 oder 2, **dadurch gekennzeichnet, dass** das Polyisocyanat a) ein isocyanuratgruppenhaltiges Polyisocyanat ist.

4. Verwendung einer zweikomponentigen Beschichtungsmasse gemäß einem der vorstehenden Ansprüche, **dadurch gekennzeichnet, dass** das Polyisocyanat a) eine Viskosität von 300-1200 mPa*s (23 °C) aufweist.

5. Verwendung einer zweikomponentigen Beschichtungsmasse gemäß einem der vorstehenden Ansprüche, **dadurch gekennzeichnet, dass** das Poly(meth)acrylatpolyol b) ein Molekulargewicht M_{N} (Zahlenmittel) von 500 bis 50000 D, bevorzugt von 500-5000 D, besonders bevorzugt von 800-2000 D aufweist.

6. Verwendung einer zweikomponentigen Beschichtungsmasse gemäß einem der vorstehenden Ansprüche, **dadurch gekennzeichnet, dass** die zweikomponentige Beschichtungsmasse als weitere Komponente mindestens ein Polyesterpolyol enthält, welches ein zahlenmittleres Molekulargewicht Mn von 500 bis 4000, bevorzugt 700 bis 2000 g/mol und/oder eine Polydispersität von kleiner oder gleich 5, bevorzugt kleiner 3,5 aufweist.

7. Verwendung einer zweikomponentigen Beschichtungsmasse gemäß einem der vorstehenden Ansprüche, **dadurch gekennzeichnet, dass** die Lewis-Base c) einen pKa-Wert von über 8 aufweist.

8. Verwendung einer zweikomponentigen Beschichtungsmasse gemäß einem der vorstehenden Ansprüche, **dadurch gekennzeichnet, dass** die Lewis-Base c) ausgewählt ist aus der Gruppe bestehend aus tertiären aliphatischen, cycloaliphatischen, aromatischen Aminen, Amidinen, Guanidinen und amingruppenhaltigen ionischen Flüssigkeiten.

9. Verwendung einer zweikomponentigen Beschichtungsmasse gemäß einem der vorstehenden Ansprüche, **dadurch gekennzeichnet, dass** die Lewis-Base c) ein cycloaliphatisches Amin ist.

10. Verwendung einer zweikomponentigen Beschichtungsmasse gemäß einem der vorstehenden Ansprüche, **dadurch gekennzeichnet, dass** die Herstellung von Beschichtungen bei Temperaturen in einem Temperaturbereich von Umgebungstemperatur bis zu 80°C erfolgt.

11. Verwendung einer zweikomponentigen Beschichtungsmasse gemäß einem der vorhergehenden Ansprüche zum Beschichten von Gebäudeteilen, Beschichtungen auf (Groß-)-Fahrzeugen und Flugzeugen und industriellen Anwendungen, Eisenbahnen, Nutzfahrzeuge im landwirtschaftlichen und Baubereich, sogenannte ACE (agricultural, construction and earthmoving equipment), Windenergieanlagen, Brücken, Gebäuden, Strommasten, Tanks, Containern, Pipelines, Kraftwerken, chemischen Anlagen, Schiffen, Kränen, Hallen, Dächern, Möbeln, Fenstern, Türen, Parkett, Karton, für Bodenbeläge, wie bei Parkdecks oder in Krankenhäusern, und insbesondere in Automobillacken als refinish-Anwendung, bevorzugt sind refinish, Kunststoff- und Industrieanwendungen, z.B. ACE.

12. Verwendung einer zweikomponentigen Beschichtungsmasse gemäß einem der vorhergehenden Ansprüche zum Beschichten von Holz, Holzfurnier, Papier, Pappe, Karton, Textil, Folie, Leder, Vlies, Glas, Keramik, mineralischen Baustoffen, wie Zement-Formsteine und Faserzementplatten, Kunststoffen oder Metallen, die jeweils optional vorbeschichtet bzw. vorbehandelt sein können; oder zur Verwendung in Klarlacken, Basislacken, Decklacken, Primern oder Füllern.

13. Niedrigtemperaturbeschichtungsverfahren, umfassend die Verwendung von zweikomponentigen Beschichtungsmassen, enthaltend
a) mindestens ein Polyisocyanat erhältlich durch Umsetzung von Pentamethylendiisocyanat
b) mindestens ein hydroxyfunktionelles Poly(meth)acrylatpolyol
c) mindestens eine Lewis-Base als Urethanisierungskatalysator
d) mindestens ein organisches Lösungsmittel
e) optional andere lacktypische Additive
f) optional Füllstoffe, Farbstoffe und/oder Pigmente,
zur Herstellung von Beschichtungen, **dadurch gekennzeichnet** das die Herstellung der Beschichtungen in einem Temperaturbereich bis 80°C erfolgt.

## Claims

1. The use of a two-component coating composition comprising
a) at least one polyisocyanate obtainable by reacting pentamethylene diisocyanate
b) at least one hydroxy-functional poly(meth)acrylate polyol
c) at least one Lewis base as urethanization catalyst
d) at least one organic solvent
e) optionally other typical coatings additives
f) optionally fillers, dyes and/or pigments
for producing coatings in a temperature range up to 80°C.

2. The use of a two-component coating composition according to claim 1, wherein the polyisocyanate a) is selected from the group consisting of isocyanurates, urethanes, and allophanates.

3. The use of a two-component coating composition according to claim 1 or 2, wherein the polyisocyanate a) is a polyisocyanate containing isocyanurate groups.

4. The use of a two-component coating composition according to any of the preceding claims, wherein the polyisocyanate a) has a viscosity of 300-1200 mPa*s (23°C).

5. The use of a two-component coating composition according to any of the preceding claims, wherein the poly(meth)acrylate polyol b) has a molecular weight Mₙ (number average) of 500 to 50 000 D, preferably of 500-5000 D, more preferably of 800-2000 D.

6. The use of a two-component coating composition according to any of the preceding claims, wherein the two-component coating composition comprises as a further component at least one polyester polyol which has a number-average molecular weight Mn of 500 to 4000, preferably 700 to 2000 g/mol and/or a polydispersity of less than or equal to 5, preferably less than 3.5.

7. The use of a two-component coating composition according to any of the preceding claims, wherein the Lewis base c) has a pKa of more than 8.

8. The use of a two-component coating composition according to any of the preceding claims, wherein the Lewis base c) is selected from the group consisting of tertiary aliphatic, cycloaliphatic, aromatic amines, amidines, guanidines and ionic liquids containing amine groups.

9. The use of a two-component coating composition according to any of the preceding claims, wherein the Lewis base c) is a cycloaliphatic amine.

10. The use of a two-component coating composition according to any of the preceding claims, wherein coatings are produced at temperatures in a temperature range from ambient temperature up to 80°C.

11. The use of a two-component coating composition according to any of the preceding claims to coat parts of buildings, coatings on (large) vehicles and aircraft and industrial applications, railroads, utility vehicles in the agricultural and construction sectors, known as ACE (agricultural, construction, and earthmoving equipment), wind turbines, bridges, buildings, power masts, tanks, containers, pipelines, power stations, chemical plants, ships, cranes, pools, roofs, furniture, windows, doors, wood flooring, cardboard, for floor coverings, such as in the case of parking levels or in hospitals, and especially in automotive paints for refinish application; preference is given to refinish, plastics, and industrial applications, e.g., ACE.

12. The use of a two-component coating composition according to any of the preceding claims to coat wood, wood veneer, paper, paperboard, cardboard, textile, film, leather, nonwoven, glass, ceramic, mineral building materials, such as molded cement slabs and fiber cement slabs, plastics, or metals, each of which may optionally have been already coated and/or pretreated; or for use in clearcoat, basecoat, topcoat, primer coating, or surfacer materials.

13. A low-temperature coating method encompassing the use of two-component coating compositions comprising
a) at least one polyisocyanate obtainable by reacting pentamethylene diisocyanate
b) at least one hydroxy-functional poly(meth)acrylate polyol
c) at least one Lewis base as urethanization catalyst
d) at least one organic solvent
e) optionally other typical coatings additives
f) optionally fillers, dyes and/or pigments
for producing coatings, wherein the coatings are produced in a temperature range to 80°C.

## Revendications

1. Utilisation d'une masse de revêtement à deux composants, contenant
a) au moins un polyisocyanate pouvant être obtenu par la transformation de diisocyanate de pentaméthylène
b) au moins un poly(méth)acrylate-polyol à fonctionnalité hydroxyle
c) au moins une base de Lewis en tant que catalyseur de transformation en uréthane
d) au moins un solvant organique
e) éventuellement d'autres additifs habituels pour les laques
f) éventuellement des charges, des colorants et/ou des pigments,
pour la fabrication de revêtements dans une plage de température jusqu'à 80°C.

2. Utilisation d'une masse de revêtement à deux composants selon la revendication 1, **caractérisée en ce que** le polyisocyanate a) est choisi dans le groupe constitué par les isocyanurates, les uréthanes et les allophanates.

3. Utilisation d'une masse de revêtement à deux composants selon la revendication 1 ou 2, **caractérisée en ce que** le polyisocyanate a) est un polyisocyanate contenant des groupes isocyanurate.

4. Utilisation d'une masse de revêtement à deux composants selon l'une quelconque des revendications précédentes, **caractérisée en ce que** le polyisocyanate a) présente une viscosité de 300-1200 mPa.s (23°C).

5. Utilisation d'une masse de revêtement à deux composants selon l'une quelconque des revendications précédentes, **caractérisée en ce que** le poly(méth)acrylate-polyol b) présente un poids moléculaire M_{N} (moyen en nombre) de 500 jusqu'à 50.000 daltons, préférablement de 500-5000 daltons, particulièrement préférablement de 800-2000 daltons.

6. Utilisation d'une masse de revêtement à deux composants selon l'une quelconque des revendications précédentes, **caractérisée en ce que** la masse de revêtement à deux composants contient un polyester-polyol en tant qu'autre composant, qui présente un poids moléculaire moyen en nombre Mn de 500 jusqu'à 4000, préférablement de 700-2000 g/mole et/ou une polydispersité inférieure ou égale à 5, préférablement inférieure à 3,5.

7. Utilisation d'une masse de revêtement à deux composants selon l'une quelconque des revendications précédentes, **caractérisée en ce que** la base de Lewis c) présente une valeur de pKa supérieure à 8.

8. Utilisation d'une masse de revêtement à deux composants selon l'une quelconque des revendications précédentes, **caractérisée en ce que** la base de Lewis c) est choisie dans le groupe constitué par les amines, les amidines, les guanidines et les liquides ioniques contenant des groupes amine, tertiaires aliphatiques, cycloaliphatiques, aromatiques.

9. Utilisation d'une masse de revêtement à deux composants selon l'une quelconque des revendications précédentes, **caractérisée en ce que** la base de Lewis c) est une amine cycloaliphatique.

10. Utilisation d'une masse de revêtement à deux composants selon l'une quelconque des revendications précédentes, **caractérisée en ce que** la préparation de revêtements s'effectue à des températures dans une plage de température de la température ambiante jusqu'à 80°C.

11. Utilisation d'une masse de revêtement à deux composants selon l'une quelconque des revendications précédentes pour le revêtement d'éléments de bâtiments, pour des revêtements sur des véhicules (poids-lourds) et sur des avions et pour des applications industrielles, sur des chemins de fer, sur des véhicules utilitaires dans le domaine agricole ou de la construction, dits ACE (agricultural, construction and earthmoving equipment-matériel agricole, de construction et de terrassement), sur des installations d'énergie éolienne, sur des ponts, sur des bâtiments, sur des pylônes électriques, sur des réservoirs, sur des conteneurs, sur des pipelines, sur des centrales électriques, sur des installations chimiques, sur des bateaux, sur des grues, sur des halles, sur des toits, sur des meubles, sur des fenêtres, sur des portes, sur des parquets, sur du carton, pour des revêtements de sol, comme dans des parkings ou dans des hôpitaux et en particulier dans des laques automobiles en tant qu'applications de finition, préférablement pour des applications de finition, des applications pour plastique et des applications industrielles, par exemple pour des ACE.

12. Utilisation d'une masse de revêtement à deux composants selon l'une quelconque des revendications précédentes pour le revêtement de bois, de placage de bois, de papier, de carton-pâte, de carton, de textile, de feuille, de cuir, de non-tissé, de verre, de céramique, de matériaux minéraux de construction, comme des moulages en ciment et des plaques de fibrociment, de plastiques ou de métaux, qui à chaque fois peuvent éventuellement être pré-revêtus ou, selon le cas prétraités ; ou bien pour l'utilisation dans des laques transparentes, des laques de base, des laques de revêtement, des apprêts ou des diluants.

13. Procédé de revêtement à basse température, comprenant l'utilisation de masses de revêtement à deux composants, contenant
a) au moins un polyisocyanate pouvant être obtenu par la transformation de diisocyanate de pentaméthylène
b) au moins un poly(méth)acrylate-polyol à fonctionnalité hydroxyle
c) au moins une base de Lewis en tant que catalyseur de transformation en uréthane
d) au moins un solvant organique
e) éventuellement d'autres additifs habituels pour les laques
f) éventuellement des charges, des colorants et/ou des pigments,
pour la fabrication de revêtements, **caractérisé en ce que** la préparation des revêtements s'effectue dans une plage de température jusqu'à 80°C.
